# EUROPEAN PATENT APPLICATION

(11) **EP 4 654 550 A1**
(43) Date of publication of application: **26.11.2025**
(21) Application number: 23920869.7
(22) Date of filing: 06.12.2023
(51) Int. Cl.: H04L 47/76

(54) **INFORMATION PROCESSING METHOD AND APPARATUS**

(30) Priority: 07.02.2023 CN 202310129439
(71) Applicant: Huawei Technologies Co., Ltd., Shenzhen, Guangdong 518129 (CN)
(72) Inventor: ZHANG, Ka, Shenzhen, Guangdong 518129 (CN); HU, Zhibo, Shenzhen, Guangdong 518129 (CN)
(74) Representative: Goddar, Heinz J.
(86) International application number: PCT/CN2023/136636
(87) International publication number: WO 2024/164680

(57) **Abstract**

Embodiments of this application disclose an information processing method, applied to a first network device. A first SR policy includes a first candidate path and a second candidate path. The first network device may determine that service traffic is transmitted through the first candidate path and not transmitted through the second candidate path. After determining that the service traffic is transmitted through the first candidate path and not transmitted through the second candidate path, the first network device may send first information to a controller, where the first information indicates that the controller does not need to reserve a resource for the second candidate path. It can be learned that, according to this solution, the controller may release, based on the first information, a resource originally reserved for the second candidate path, so that the released resource can be used to transmit other service traffic, to improve overall utilization of network resources.

## Description

This application claims priority to Chinese Patent Application No. 202310129439.3, filed with the China National Intellectual Property Administration on February 7, 2023 and entitled "INFORMATION PROCESSING METHOD AND APPARATUS", which is incorporated herein by reference in its entirety.

### TECHNICAL FIELD

This application relates to the communication field, and in particular, to an information processing method and apparatus.

### BACKGROUND

A segment routing (segment routing, SR) policy (policy), which is a tunnel traffic steering technology, may include multiple candidate paths (candidate paths) from a head node to a destination node. A controller may obtain the candidate paths through computation, and deliver the SR policy including the candidate paths to the head node.

Currently, after obtaining the candidate paths through computation, the controller reserves resources for each of the candidate paths. However, this manner makes overall utilization of network resources insufficient.

Therefore, there is an urgent need for a solution to resolve the foregoing problem.

### SUMMARY

Embodiments of this application provide an information processing method, to improve overall utilization of network resources.

According to a first aspect, an embodiment of this application provides an information processing method, and the method may be applied to a first network device. In an example, a first SR policy includes a first candidate path and a second candidate path. The first network device may determine that service traffic is transmitted through the first candidate path, and determine that the service traffic is not transmitted through the second candidate path. After determining that the service traffic is transmitted through the first candidate path and determining that the service traffic is not transmitted through the second candidate path, the first network device may send first information to a controller, where the first information indicates that the controller does not need to reserve a resource for the second candidate path. It can be learned that, according to this solution, when determining that the service traffic is not transmitted through the second candidate path, the first network device may send, to the controller, the first information indicating that the controller does not need to reserve a resource for the second candidate path. In this way, the controller can release, based on the first information, a resource originally reserved for the second candidate path, so that the released resource can be used to transmit other service traffic, to improve overall utilization of network resources.

In a possible implementation, it is considered that a network device may transfer information related to an SR policy to the controller via a border gateway protocol link-state (Border Gateway Protocol Link-state, BGP LS) message. Therefore, in an example, the first network device may send a BGP LS message including the first information to the controller, to send the first information to the controller, so that the controller releases, based on the first information, the resource originally reserved for the second candidate path. Therefore, the released resource can be used to transmit other service traffic, to improve the overall utilization of the network resources.

In a possible implementation, it is considered that a network device may transfer information related to an SR policy to the controller according to a path computation element communication protocol (Path Computation Element Communication Protocol, PCEP). Therefore, in an example, the first network device may send a first PCEP message including the first information to the controller, to send the first information to the controller, so that the controller releases, based on the first information, the resource originally reserved for the second candidate path. Therefore, the released resource can be used to transmit other service traffic, to improve the overall utilization of the network resources.

In a possible implementation, the first message may be carried in a first type length value (type length value, TLV). For example, the BGP LS message includes the first TLV. For another example, the first PCEP message includes the first TLV.

In a possible implementation, the first information may be indication information indicating that the service traffic is not transmitted through the second candidate path. For example, when the first information is carried in the first TLV, a type field of the first TLV may indicate the indication information.

In a possible implementation, the first information may be a resource value used for actual transmission of the service traffic through the second candidate path. When the service traffic is not transmitted through the second candidate path, the resource value used for actual transmission of the service traffic through the second candidate path may be 0. For example, when the first information is carried in the first TLV, the value field of the first TLV may be used to carry the resource value 0 used for actual transmission of the service traffic through the second candidate path.

In a possible implementation, before determining that the service traffic is transmitted through the first candidate path and that the service traffic is not transmitted through the second candidate path, the first network device may further receive the first SR policy sent by the controller.

In a possible implementation, when the first network device determines that the service traffic needs to be transmitted through the second candidate path, the first network device may transmit the service traffic through the second candidate path. In addition, as described above, after the first network device sends the first information to the controller, the controller may release the resource reserved for the second candidate path. If the released resource has been occupied by other service traffic, the second candidate path may not have sufficient resources to transmit the service traffic. Consequently, quality of service that can be provided by the second candidate path cannot meet a service requirement. To avoid this problem, in an implementation of this embodiment of this application, the first network device may further send second information to the controller. The second information is used to request to reserve a resource for the second candidate path, to meet the service requirement as much as possible.

In a possible implementation, the controller may determine a third candidate path. For example, the controller may obtain the third candidate path through computation based on a service requirement corresponding to the first SR policy, and reserve a resource for the third candidate path. After obtaining the third candidate path through computation, the controller may obtain a second SR policy based on the third candidate path. The second SR policy is an update policy of the first SR policy, and the second SR policy may further include the first candidate path in addition to the third candidate path. After obtaining the second SR policy, the controller may send the second SR policy to the first network device. For example, after receiving the second information sent by the first network device, the controller may send the second SR policy to the first network device. In an example, after receiving the second SR policy, the first network device may transmit the service traffic through the third candidate path, to meet the foregoing service requirement.

In a possible implementation, the first network device may receive third information sent by the controller. The third information indicates that release of a resource occupied by a candidate path that is in the first SR policy and that is not used to transmit the service traffic is supported. After receiving the third information, if determining that the service traffic is not transmitted through the second candidate path, the first network device sends the first information to the controller, so that the controller releases, based on the first information, the resource originally reserved for the second candidate path. Therefore, the released resource can be used to transmit other service traffic, to improve the overall utilization of the network resources.

In a possible implementation, it is considered that the controller may deliver the information related to the SR policy to the network device via a BGP message. Therefore, in an example, during specific implementation of receiving the third information sent by the controller, the first network device may receive the BGP message sent by the controller. The BGP message includes the third information.

In a possible implementation, it is considered that the controller may deliver the information related to the SR policy to the network device via a PCPE message. Therefore, in an example, during specific implementation of receiving the third information sent by the controller, the first network device may receive a second PCEP message sent by the controller. The second PCEP message includes the third information.

In a possible implementation, the third message may be carried in a second TLV. For example, the BGP message includes the second TLV. For another example, the second PCEP message includes the second TLV.

According to a second aspect, an embodiment of this application provides an information processing method, and the method may be applied to a controller. In an example, the controller may receive first information sent by a first network device. The first information indicates that the controller does not need to reserve a resource for a second candidate path included in a first SR policy. The first SR policy includes a first candidate path and the second candidate path, service traffic is transmitted through the first candidate path and not transmitted through the second candidate path. After receiving the first information, the controller may release, based on the first information, a resource reserved for the second candidate path. In this way, the released resource can be used to transmit other service traffic, to improve overall utilization of network resources.

In a possible implementation, the receiving the first information sent by the first network device includes: receiving a border gateway protocol link-state BGP LS message sent by the first network device. The BGP LS message includes the first information.

In a possible implementation, the receiving the first information sent by the first network device includes: receiving a first path computation element communication protocol PCEP message sent by the first network device. The first PCEP message includes the first information.

In a possible implementation, the first information is carried in a first type length value TLV.

In a possible implementation, the first information includes indication information indicating that the service traffic is not transmitted through the second candidate path, or a resource value used for actual transmission of the service traffic through the second candidate path.

In a possible implementation, the method further includes: sending the first SR policy to the first network device.

In a possible implementation, the method further includes: receiving second information sent by the first network device. The second information is used to request the controller to reserve a resource for the second candidate path.

In a possible implementation, after releasing the resource reserved for the second candidate path, the controller may recompute a candidate path for the first SR policy. In an example, after receiving the second information, the controller may recompute a candidate path for the first SR policy. In another example, after releasing the resource reserved for the second candidate path, the controller may alternatively immediately recompute a candidate path for the first SR policy. In an example, the controller may determine a third candidate path, and reserve a resource for the third candidate path. After obtaining the third candidate path through computation, the controller may obtain a second SR policy based on the third candidate path. The second SR policy is an update policy of the first SR policy, and the second SR policy may further include the first candidate path in addition to the third candidate path.

In a possible implementation, after obtaining the second SR policy, the controller may send the second SR policy to the first network device. For example, after receiving the second information sent by the first network device, the controller may send the second SR policy to the first network device. In an example, after receiving the second SR policy, the first network device may transmit the service traffic through the third candidate path.

In a possible implementation, the method further includes: sending third information to the first network device. The third information indicates that release of a resource occupied by a candidate path that is in the first SR policy and that is not used to transmit the service traffic is supported.

In a possible implementation, the sending the third information to the first network device includes: sending a BGP message to the first network device. The BGP message includes the third information.

In a possible implementation, the sending the third information to the first network device includes: sending a second PCEP message to the first network device. The second PCEP message includes the third information.

In a possible implementation, the third information is carried in a second TLV.

According to a third aspect, an embodiment of this application provides an information processing apparatus, used in a first network device. The apparatus includes: a processing unit, configured to: determine that service traffic is transmitted through a first candidate path and not transmitted through a second candidate path, where the first candidate path and the second candidate path belong to a first segment routing policy SR policy; and a sending unit, configured to send first information to a controller, where the first information indicates that the controller does not need to reserve a resource for the second candidate path.

In a possible implementation, the sending unit is configured to send, to the controller, a border gateway protocol link-state BGP LS message including the first information.

In a possible implementation, the sending unit is configured to send, to the controller, a first path computation element communication protocol PCEP message including the first information.

In a possible implementation, the first information is carried in a first type length value TLV.

In a possible implementation, the first information includes indication information indicating that the service traffic is not transmitted through the second candidate path, or a resource value used for actual transmission of the service traffic through the second candidate path.

In a possible implementation, the apparatus further includes a receiving unit, configured to receive the first SR policy sent by the controller.

In a possible implementation, the sending unit is further configured to send second information to the controller when determining that the service traffic needs to be transmitted through the second candidate path. The second information is used to request the controller to reserve a resource for the second candidate path.

In a possible implementation, the receiving unit included in the apparatus is further configured to receive a second SR policy sent by the controller, where the second SR policy includes a third candidate path, the controller reserves a resource for the third candidate path, and the second SR policy is an update policy of the first SR policy. The sending unit is further configured to transmit the service traffic according to the second SR policy through the third candidate path.

In a possible implementation, the receiving unit included in the apparatus is further configured to receive third information sent by the controller. The third information indicates that release of a resource occupied by a candidate path that is in the first SR policy and that is not used to transmit the service traffic is supported. The sending unit is configured to send the first information to the controller based on the third information.

In a possible implementation, the receiving unit is configured to receive a BGP message sent by the controller. The BGP message includes the third information.

In a possible implementation, the receiving unit is configured to receive a second PCEP message sent by the controller. The second PCEP message includes the third information.

In a possible implementation, the third information is carried in a second TLV.

According to a fourth aspect, an embodiment of this application provides an information processing apparatus, used in a controller. The apparatus includes: a receiving unit, configured to receive first information sent by a first network device, where the first information indicates that the controller does not need to reserve a resource for a second candidate path included in a first segment routing policy SR policy, the first SR policy includes a first candidate path and the second candidate path, service traffic is transmitted through the first candidate path and not transmitted through the second candidate path; and a processing unit, configured to release, based on the first information, a resource reserved for the second candidate path.

In a possible implementation, the receiving unit is configured to receive a border gateway protocol link-state BGP LS message sent by the first network device. The BGP LS message includes the first information.

In a possible implementation, the receiving unit is configured to receive a first path computation element communication protocol PCEP message sent by the first network device. The first PCEP message includes the first information.

In a possible implementation, the first information is carried in a first type length value TLV.

In a possible implementation, the first information includes indication information indicating that the service traffic is not transmitted through the second candidate path, or a resource value used for actual transmission of the service traffic through the second candidate path.

In a possible implementation, the apparatus further includes a sending unit, configured to send the first SR policy to the first network device.

In a possible implementation, the receiving unit is further configured to receive second information sent by the first network device. The second information is used to request the controller to reserve a resource for the second candidate path.

In a possible implementation, the processing unit is further configured to: determine a third candidate path, reserve a resource for the third candidate path, and obtain a second SR policy including the third candidate path, where the second SR policy is an update policy of the first SR policy. The sending unit included in the apparatus is further configured to send the second SR policy to the first network device.

In a possible implementation, the sending unit is configured to: after receiving the second information sent by the first network device, send the second SR policy to the first network device. The second information is used to request the controller to reserve a resource for the second candidate path.

In a possible implementation, the sending unit included in the apparatus is further configured to send third information to the first network device. The third information indicates that release of a resource occupied by a candidate path that is in the first SR policy and that is not used to transmit the service traffic is supported.

In a possible implementation, the sending unit is further configured to send a BGP message to the first network device. The BGP message includes the third information.

In a possible implementation, the sending unit is further configured to send a second PCEP message to the first network device. The second PCEP message includes the third information.

In a possible implementation, the third information is carried in a second TLV.

According to a fifth aspect, an embodiment of this application provides a device. The device includes a processor and a memory. The memory is configured to store instructions or a computer program. The processor is configured to: execute the instructions or the computer program in the memory, and perform the method according to any one of the first aspect, or perform the method according to any one of the second aspect.

According to a sixth aspect, an embodiment of this application provides a computer-readable storage medium, including instructions or a computer program. When the instructions or the computer program is run on a computer, the computer is enabled to perform the method according to any one of the first aspect or perform the method according to any one of the second aspect.

According to a seventh aspect, an embodiment of this application provides a computer program product including instructions or a computer program. When the instructions or the computer program is run on a computer, the computer is enabled to perform the method according to any one of the first aspect or perform the method according to any one of the second aspect.

According to an eighth aspect, an embodiment of this application provides a communication system. The communication system includes a first network device that performs the information processing method according to the first aspect and any one of the first aspect, and a controller that performs the information processing method according to the second aspect and any one of the second aspect.

### BRIEF DESCRIPTION OF DRAWINGS

To describe technical solutions in embodiments of this application or the prior art more clearly, the following briefly describes the accompanying drawings for describing embodiments or the prior art. It is clear that the accompanying drawings in the following descriptions show only some embodiments recorded in this application, and a person of ordinary skill in the art may still derive other accompanying drawings from these accompanying drawings without creative efforts.
FIG. 1 is a diagram of an example of an application scenario according to an embodiment of this application;
FIG. 2 is a diagram of signaling interaction of an information processing method according to an embodiment of this application;
FIG. 3a is a diagram of a structure of a first TLV according to an embodiment of this application;
FIG. 3b is a diagram of a structure of another first TLV according to an embodiment of this application;
FIG. 3c is a diagram of a structure of a TLV according to an embodiment of this application;
FIG. 3d is a diagram of a structure of another first TLV according to an embodiment of this application;
FIG. 3e is a diagram of a structure of a second TLV according to an embodiment of this application;
FIG. 4 is a diagram of a structure of an information processing apparatus according to an embodiment of this application;
FIG. 5 is a diagram of a structure of an information processing apparatus according to an embodiment of this application; and
FIG. 6 is a diagram of a structure of a device according to an embodiment of this application.

### DESCRIPTION OF EMBODIMENTS

Embodiments of this application provide an information processing method, to improve overall utilization of network resources.

For ease of understanding, an SR policy and a possible application scenario in embodiments of this application are first described.

The SR policy may be identified by using a head point, a color (color) attribute, and an end point (end point).

The head point identifies a device that generates the SR policy, and is also a head node of a candidate path included in the SR policy.

The color attribute is an extended community attribute carried in the SR policy, and all border gateway protocol (Border Gateway Protocol, BGP) routes carrying a same color attribute can use the SR policy.

The end point (End Point) is a tail node of the candidate path included in the SR policy.

The SR policy may include multiple candidate paths from the head node to a destination node. Each candidate path may be associated with at least one segment list (segment list). One segment list may correspond to one end-to-end path from the head node to the destination node. For a candidate path, if the candidate path is associated with multiple segment lists, load balancing may be performed between multiple paths corresponding to the multiple segment lists, to implement equal-cost multiple path (equal-cost multiple path, ECMP) or unequal-cost multiple path (unequal-cost multiple path, UCMP). For example, a load ratio of traffic on a path corresponding to a segment list may be determined based on a weight (weight) attribute corresponding to the segment list, to implement ECMP/UCMP.

The multiple candidate paths in the SR policy have priorities. When the SR policy is used, the head node may select a valid candidate path with a highest priority as a primary path and a candidate path with a second highest priority as a backup path. If the primary path is faulty, service traffic may be switched to the backup path. After the primary path recovers, the service traffic may be switched back to the primary path.

Currently, the candidate path in the SR policy is computed by a controller. For example, the candidate path in the SR policy may be computed by a path computation element (path calculation element, PCE) of the controller. When computing the candidate path for the SR policy, the controller may specify a resource requirement of the SR policy, and obtain, based on the resource requirement through computation, a candidate path that meets the resource requirement. After obtaining the candidate paths in the SR policy through computation, the controller may deliver the SR policy to the head node and reserve a resource for each candidate path. The reserved resource is reserved for the SR policy and cannot be used for another purpose.

The resource mentioned in embodiments of this application includes but is not limited to a bandwidth resource. In an example, when the resource is a bandwidth resource, during specific implementation, that the controller reserves a bandwidth for a candidate path may be: For each of network devices other than a tail node on the candidate path, the bandwidth reserved for the candidate path may be subtracted from a first available bandwidth of an egress interface that is of the network device and that corresponds to the candidate path, to obtain a second available bandwidth of the egress interface. The first available bandwidth is an available bandwidth corresponding to the egress interface before the controller reserves a bandwidth for the candidate path, and the second available bandwidth is an available bandwidth corresponding to the egress interface after the controller reserves a bandwidth for the candidate path.

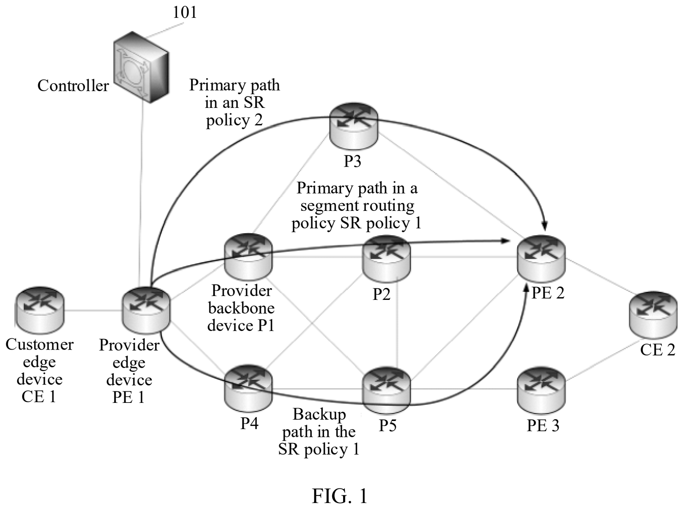

However, the controller reserves a resource for each candidate path in the SR policy. Consequently, overall utilization of network resources is not high. Descriptions are provided with reference to FIG. 1. FIG. 1 is a diagram of an example of an application scenario according to an embodiment of this application.

Connection relationships between devices in FIG. 1 are not described in detail herein.

As shown in FIG. 1, a controller 101 may deliver an SR policy 1 and an SR policy 2 to a head node provider edge device (provider edge, PE) 1.

The SR policy 1 includes candidate paths "PE 1→provider backbone device (provider, P) 1→P2→PE 2" and "PE 1→P4→P5→PE 2". "PE 1→P1→P2→PE 2" is a primary path, and "PE 1→P4→P5→PE 2" is a backup path. Service traffic may be transmitted through the primary path "PE 1→P1→P2→PE 2", and the backup path "PE 1→P4→P5→PE 2" is used as a backup path of the primary path. When the service traffic is transmitted through the primary path "PE 1→P1→P2→PE 2", the service traffic is not transmitted through the backup path "PE 1→P4→P5→PE 2".

The primary path mentioned in embodiments of this application may be understood as an active (active) path or an activated path. Generally, the primary path is a path for actual transmission of the service traffic.

As described above, after obtaining the candidate paths in the SR policy 1 through computation, the controller reserves a resource for each candidate path. Therefore, the controller 101 reserves a resource for transmitting the service traffic for both the primary path "PE 1→P1→P2→PE 2" and the backup path "PE 1→P4→P5→PE 2".

As shown in FIG. 1, the SR policy 2 includes a candidate path "PE 1→P1→P3→PE 2", and the candidate path "PE 1→P1→P3→PE 2" is a primary path. In some scenarios, the controller 101 may recompute a candidate path for the SR policy 2. For example, the primary path "PE 1→P1→P3→PE 2" in the SR policy 2 is faulty, and a backup path (not shown in FIG. 1) in the SR policy 2 is also faulty. When the controller 101 recomputes a candidate path for the SR policy 2, an idle resource of the backup path "PE 1→P4→P5→PE 2" in the SR policy 1 cannot be used because the controller 101 reserves a resource for transmitting the service traffic for the backup path "PE 1→P4→P5→PE 2". Therefore, overall utilization of network resources is not high. To resolve the foregoing problem, embodiments of this application provide an information processing method. The following describes, with reference to the accompanying drawings, the information processing method provided in embodiments of this application.

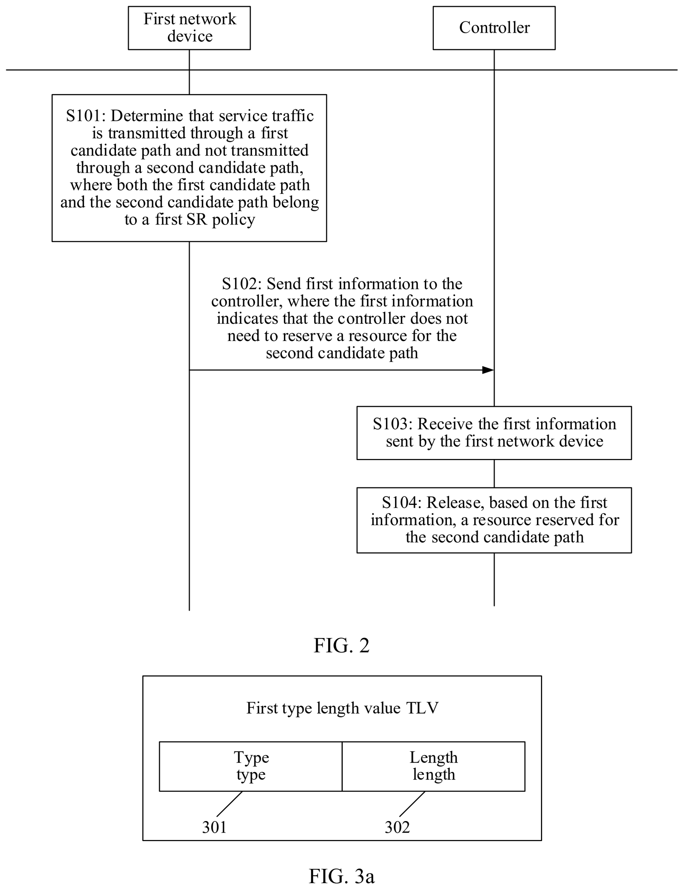

FIG. 2 is diagram of signaling interaction of an information processing method according to an embodiment of this application. The information processing method shown in FIG. 2 may be applied to, for example, the application scenario shown in FIG. 1. In this case, a first network device shown in FIG. 2 may correspond to the PE 1 shown in FIG. 1. A controller shown in FIG. 2 may correspond to the controller 101 shown in FIG. 1. A first SR policy mentioned in FIG. 2 may correspond to the SR policy 1 shown in FIG. 1. A first candidate path mentioned in FIG. 2 may correspond to the primary path "PE 1→P1→P2→PE 2" shown in FIG. 1, and a second candidate path mentioned in FIG. 2 may correspond to the backup path "PE 1→P4→P5→PE 2" shown in FIG. 1.

The information processing method shown in FIG. 2 may include, for example, the following S101 to S104.

S101: The first network device determines that service traffic is transmitted through the first candidate path and not transmitted through the second candidate path, where both the first candidate path and the second candidate path belong to the first SR policy.

In an example, the first SR policy may include the first candidate path and the second candidate path, which are candidate paths from the first network device to a second network device. In other words, the first network device may be a head node of the candidate path included in the first SR policy. The first network device may receive the first SR policy from the controller.

After receiving the first SR policy sent by the controller, the first network device may determine which candidate path in the first candidate path and the second candidate path is a primary path and which candidate path is a backup path. The service traffic is transmitted through the primary path, and the service traffic is not transmitted through the backup path. The service traffic mentioned herein may be service traffic that needs to be transmitted according to the first SR policy. The service traffic may include traffic of one or more services, or the service traffic may include one or more service flows.

In an example, the first network device may determine, based on priorities of the first candidate path and the second candidate path and path statuses of the first candidate path and the second candidate path, that the service traffic is transmitted through the first candidate path, and determine that the service traffic is not transmitted through the second candidate path. For example, when neither the first candidate path nor the second candidate path is faulty, and the priority of the first candidate path is higher than the priority of the second candidate path, the first network device determines that the service traffic is transmitted through the first candidate path, and determines that the service traffic is not transmitted through the second candidate path. For another example, if the first network device determines that the first candidate path is not faulty and the second candidate path is faulty, the first network device may determine that the service traffic is transmitted through the first candidate path, and determine that the service traffic is not transmitted through the second candidate path.

A specific implementation in which the first network device determines the path statuses of the first candidate path and the second candidate path is not specifically limited in this embodiment of this application. In an example, the first network device may determine the path statuses of the first candidate path and the second candidate path based on a detection message, for example, a bidirectional forwarding detection (bidirectional forwarding detection, BFD) message.

S102: The first network device sends first information to the controller, where the first information indicates that the controller does not need to reserve a resource for the second candidate path.

S103: The controller receives the first information sent by the first network device.

After determining that the service traffic is not transmitted through the second candidate path, the first network device may send, to the controller, the first information indicating that the controller does not need to reserve a resource for the second candidate path. Correspondingly, the controller may receive the first information sent by the first network device.

In an example, the first network device may include the first information in a first message, and send the first message to the controller. In an example, the first message may include a first TLV, and the first TLV is used to carry the first information. In another example, the first information may alternatively be carried in another field in the first message. This is not specifically limited in this embodiment of this application.

The first message is not specifically limited in this embodiment of this application. The first message may be any type of message that can be exchanged between the controller and a network device. In an example, it is considered that the network device may transfer information related to an SR policy to the controller via a BGP LS message or a PCEP message. Therefore, in an example, the first message may be a BGP LS message. In this case, the first network device may send the BGP LS message including the first information to the controller, to send the first information to the controller. In another example, the first message may be a first PCEP message. In this case, the first network device may send the first PCEP message including the first information to the controller, to send the first information to the controller.

In an example, the first information may be indication information indicating that the service traffic is not transmitted through the second candidate path. For example, when the first information is carried in the first TLV, a type field of the first TLV may indicate the indication information. In this case, a structure of the first TLV may be shown in FIG. 3a. As shown in FIG. 3a, the first TLV may include a type field 301 and a length field 302.

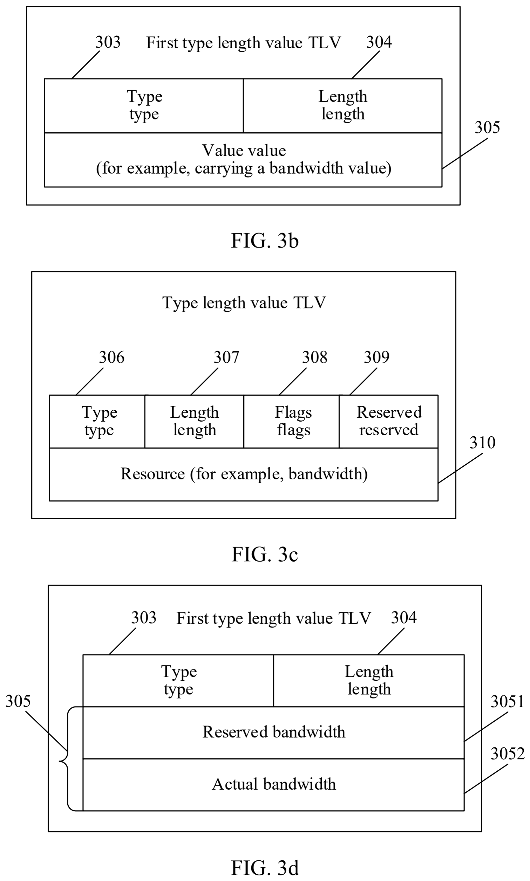

In another example, the first information may be a resource value used for actual transmission of the service traffic through the second candidate path. When the service traffic is not transmitted through the second candidate path, the resource value used for actual transmission of the service traffic through the second candidate path may be 0. For example, when the first information is carried in the first TLV, a value field of the first TLV may be used to carry the resource value 0 used for actual transmission of the service traffic through the second candidate path. In this case, a structure of the first TLV may be shown in FIG. 3b. As shown in FIG. 3b, the first TLV may include a type field 303, a length field 304, and a value field 305. When the resource is a bandwidth resource, for example, the value field 305 may be used to carry a bandwidth value used for actual transmission of the service traffic through the second candidate path.

In another example, after receiving the first SR policy, the first network device may report a status of a candidate path in the first SR policy to the controller. After determining that the service traffic is transmitted through the first candidate path and not transmitted through the second candidate path, the first network device may report, to the controller, that the status of the first candidate path is active, and that the status of the second candidate path is backup (backup). In an example, the first information may be the status of the second candidate path mentioned herein. In this case, in addition to indicating that the second candidate path is the backup path as in conventional technologies, the status of the second candidate path may further indicate that the controller does not need to reserve a resource for the second candidate path.

In an example, when sending the first SR policy to the first network device, the controller may also send, to the first network device, resource values reserved for the first candidate path and the second candidate path that are included in the first SR policy. The second candidate path is used as an example. For example, the controller may add a resource attribute to a segment list corresponding to the second candidate path, and deliver, to the first network device via the resource attribute, the resource value reserved for the second candidate path. In an example, the resource attribute may be carried in a TLV field. Refer to FIG. 3c. The TLV field may include a type field 306, a length field 307, a flags (flags) field 308, a reserved field 309, and a resource field 310. The resource field may be used to carry the resource value reserved for the second candidate path. In an example, the resource field may be used to carry a bandwidth value reserved for the second candidate path. Content carried in the flags field 308 and the reserved field 309 is not specifically limited in this embodiment of this application.

In an example, if the controller also delivers the resource value reserved for the second candidate path to the first network device, when reporting the first information to the controller, the first network device may also send the resource value reserved by the controller for the second candidate path to the controller. The controller may perform check based on the resource value sent by the first network device. In addition, in a scenario in which the controller is restarted, the controller may further determine, based on the resource value sent by the first network device, a resource value that needs to be released. In an example, the first network device may include, in the first TLV, the resource value reserved by the controller for the second candidate path, and send the first TLV to the controller. For example, the structure of the first TLV is shown in FIG. 3b. In addition to carrying the resource value used for actual transmission of the service traffic through the second candidate path, the value field 305 of the first TLV may be further used to carry the resource value reserved by the controller for the second candidate path. When a resource reserved by the controller for the second candidate path is a bandwidth, a structure of the first TLV may be shown in FIG. 3d. As shown in FIG. 3d, a value field 305 of the first TLV includes a reserved bandwidth field 3051 and an actual bandwidth field 3052, the reserved bandwidth field 3051 is used to carry a bandwidth value reserved by the controller for the second candidate path, and the actual bandwidth field 3052 is used to carry a bandwidth value used for actual transmission of the service traffic through the second candidate path.

In an example, the first network device may perform S102 based on configuration information. In an example, the configuration information may indicate that release of a resource occupied by a candidate path that is in the first SR policy and that is not used to transmit the service traffic is supported. In another example, the configuration information may indicate, for example, that release of a resource occupied by a candidate path that is in each SR policy received by the first network device and that is not used to transmit service traffic corresponding to the SR policy is supported. For example, the configuration information may be preconfigured on the first network device.

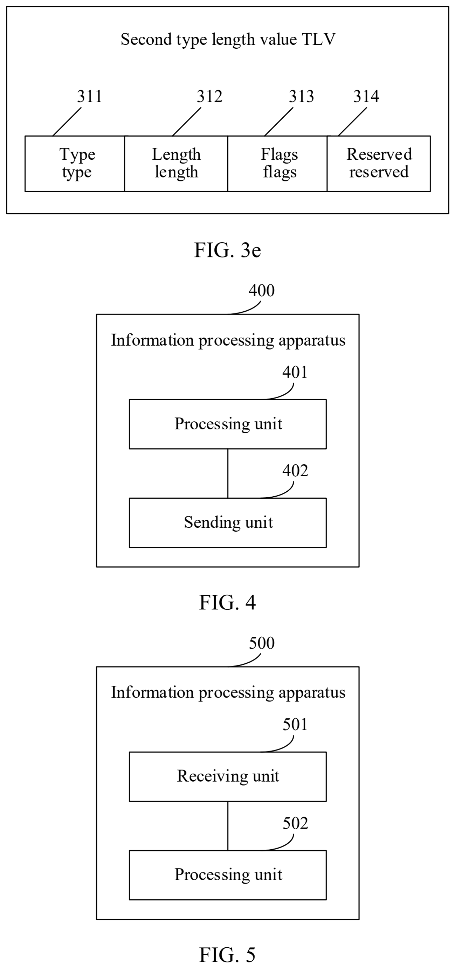

In another example, the first network device may receive third information sent by the controller, and perform S102 based on the third information. The third information indicates that release of a resource occupied by a candidate path that is in the first SR policy and that is not used to transmit the service traffic is supported. In an example, the controller may include the third information in a second message, and send the second message to the first network device. In an example, the second message may include a second TLV, and the second TLV is used to carry the third information. FIG. 3e is a diagram of a structure of a second TLV. As shown in FIG. 3e, the second TLV includes a type field 311, a length field 312, a flags field 313, and a reserved field 314. In an example, the type field 311 indicates that the second TLV carries the third information. Content carried in the flags field 313 and the reserved field 314 is not specifically limited in this embodiment of this application. In another example, the third information may alternatively be carried in another field in the second message. This is not specifically limited in this embodiment of this application. The second message is not specifically limited in this embodiment of this application. The second message may be any type of message that can be exchanged between the controller and a network device. In an example, it is considered that the controller may deliver information related to an SR policy to the network device via a BGP message or a PCEP message. Therefore, in an example, the second message may be a BGP message. In this case, the controller may send the BGP message including the third information to the first network device, to send the third information to the first network device. In another example, the second message may be a second PCEP message. In this case, the controller may send the second PCEP message including the third information to the first network device, to send the third information to the first network device.

As described above, the first SR policy may be sent by the controller to the first network device. In this case, the controller may include the first SR policy and the third information in a same message and send the message to the first network device, to reduce a quantity of messages transmitted between the controller and the first network device. In this case, the second message may include the first SR policy. In an example, the third information may be used as, for example, an attribute of the first SR policy. For example, the second message may be a message obtained by adding an attribute (the third information) to SR policy subsequent address family identifier (subsequent address family identifier, SAFI) network layer reachable information (network layer reachable information, NLRI) defined by draft-ietf-idr-segment-routing-te-policy. A position of the third information in the second message is not specifically limited in this embodiment of this application. For example, the third information may be located between a policy candidate path name (policy candidate path name) and an explicit null label policy (Explicit NULL Label Policy, ENLP) in the second message.

S104: The controller releases, based on the first information, a resource reserved for the second candidate path.

After receiving the first information, the controller may release the resource reserved for the second candidate path. In an example, the controller may release a reserved resource that corresponds to the second candidate path and that is of each network device on the second candidate path. For example, if the resource is a bandwidth resource, for each of network devices other than a tail node on the second candidate path, the controller may add a bandwidth reserved for the second candidate path to a third available bandwidth of an egress interface that is of the network device and that corresponds to the second candidate path, to obtain a fourth available bandwidth of the egress interface. The third available bandwidth is an available bandwidth corresponding to the egress interface before the controller releases the bandwidth reserved for the second candidate path, and the fourth available bandwidth is an available bandwidth corresponding to the egress interface after the controller releases the bandwidth reserved for the second candidate path. For example, an egress interface that is of a network device A and that corresponds to the second candidate path is an interface A, a third available bandwidth of the interface A is a, and the bandwidth reserved by the controller for the second candidate path is b. In this case, after the controller releases the bandwidth reserved for the second candidate path, a fourth available bandwidth of the interface A is (a+b).

Because the controller releases the resource reserved for the second candidate path, the released resource can be used to transmit other service traffic, to improve overall utilization of network resources. For example, in the scenario shown in FIG. 1, a resource of the backup path "PE 1→P4→P5→PE 2" is released. In this case, when the controller recomputes a backup path for the SR policy 2, the idle resource of the backup path "PE 1→P4→P5→PE 2" can be properly used. For example, a candidate path in the SR policy 2 that is obtained by the controller through computation is "PE 1→P4→P5→PE 2". This improves the overall utilization of the network resources.

In an example, the service traffic may need to be transmitted through the second candidate path. In an example, the first network device detects that the first candidate path is faulty. To avoid a packet loss of the service traffic, the first network device determines that the service traffic needs to be transmitted through the second candidate path. In another example, the first network device receives a path switching instruction, to determine that the service traffic needs to be transmitted through the second candidate path. For example, when a network device on the first candidate path needs to be upgraded or restarted, a device administrator may trigger a path switching operation on the controller. Correspondingly, the controller sends the path switching instruction to the first network device based on the path switching operation.

In an example, when the first network device determines that the service traffic needs to be transmitted through the second candidate path, the first network device may transmit the service traffic through the second candidate path. For example, the first network device may switch the service traffic to the second candidate path for transmission. In addition, as described above, after the first network device sends the first information to the controller, the controller may release the resource reserved for the second candidate path. If the released resource has been occupied by other service traffic, the second candidate path may not have sufficient resources to transmit the service traffic. Consequently, quality of service that can be provided by the second candidate path cannot meet a service requirement. To avoid this problem, in an implementation of this embodiment of this application, the first network device may further send second information to the controller. The second information is used to request to reserve a resource for the second candidate path. In an example, the first network device may include the second information in a third message and send the third message to the controller. For example, the second information may be carried in a third TLV field in the third message. The third message mentioned herein may be a BGP LS message, or may be a PCEP message. This is not specifically limited in this embodiment of this application. Correspondingly, the controller may receive the second information sent by the first network device.

In an example, after releasing the resource reserved for the second candidate path, the controller may recompute a candidate path for the first SR policy. In an example, after receiving the second information, the controller may recompute a candidate path for the first SR policy. In another example, after releasing the resource reserved for the second candidate path, the controller may alternatively immediately recompute a candidate path for the first SR policy.

In an example, the controller may determine a third candidate path. For example, the controller may obtain the third candidate path through computation based on a service requirement corresponding to the first SR policy, and reserve a resource for the third candidate path. The service requirement corresponding to the first SR policy mentioned herein may be represented as, for example, a color attribute corresponding to the first SR policy. After obtaining the third candidate path through computation, the controller may obtain a second SR policy based on the third candidate path. The second SR policy is an update policy of the first SR policy, and the second SR policy may further include the first candidate path in addition to the third candidate path.

After obtaining the second SR policy, the controller may send the second SR policy to the first network device. For example, after receiving the second information sent by the first network device, the controller may send the second SR policy to the first network device. In an example, after receiving the second SR policy, the first network device may transmit the service traffic through the third candidate path.

In an example, the third candidate path may be the same as the second candidate path. For example, after receiving the first information sent by the first network device, if the controller determines that an available resource of the second candidate path meets the service requirement corresponding to the first SR policy, the controller may re-reserve a resource for the second candidate path, and determine the second candidate path as the third candidate path, to further obtain the second SR policy including the third candidate path.

In another example, the third candidate path may be another candidate path different from the second candidate path. For example, after receiving the first information sent by the first network device, if the controller determines that an available resource of the second candidate path does not meet the service requirement corresponding to the first SR policy, the controller may obtain, through recomputation, the third candidate path that meets the service requirement, to further obtain the second SR policy including the third candidate path. In this case, after receiving the second SR policy, the first network device may switch the service traffic from the second candidate path to the third candidate path for transmission, to implement smooth switching for the service traffic and meet the service requirement corresponding to the first SR policy.

In an example, if the third candidate path is the same as the second candidate path, after re-reserving a resource for the second candidate path, the controller may not notify the first network device. In this case, the controller re-reserves a resource for the second candidate path. Therefore, quality of service that can be actually provided by the second candidate path can meet the service requirement corresponding to the first SR policy. After determining that the service traffic needs to be transmitted through the second candidate path, the first network device has transmitted the service traffic through the second candidate path. Therefore, even if the controller does not notify the first network device, normal transmission of the service traffic by the first network device is not affected.

In another example, if the third candidate path is the same as the second candidate path, after re-reserving a resource for the second candidate path, the controller may send fourth information to the first network device. The fourth information indicates that the controller reserves a resource for the second candidate path. In this case, after receiving the fourth information, the first network device may continue transmitting the service traffic through the second candidate path. In an example, the controller may send the fourth information to the first network device via a BGP message or a PCEP message.

In another example, if the third candidate path is the same as the second candidate path, after re-reserving a resource for the second candidate path, the controller may send the first SR policy to the first network device again. After receiving the first SR policy, the first network device may continue transmitting the service traffic through the second candidate path.

Based on the information processing method provided in the foregoing embodiments, an embodiment of this application further provides a corresponding apparatus.

FIG. 4 is a diagram of a structure of an information processing apparatus according to an embodiment of this application. The information processing apparatus shown in FIG. 4 may be used in a first network device, and is configured to perform the information processing method performed by the first network device provided in the foregoing method embodiments.

In an example, the information processing apparatus 400 shown in FIG. 4 includes a processing unit 401 and a sending unit 402.

The processing unit 401 is configured to determine that service traffic is transmitted through a first candidate path and not transmitted through a second candidate path, where the first candidate path and the second candidate path belong to a first segment routing policy SR policy. The sending unit 402 is configured to send first information to a controller, where the first information indicates that the controller does not need to reserve a resource for the second candidate path.

In a possible implementation, the sending unit 402 is configured to send, to the controller, a border gateway protocol link-state BGP LS message to the controller including the first information.

In a possible implementation, the sending unit 402 is configured to send, to the controller, a first path computation element communication protocol PCEP message including the first information.

In a possible implementation, the first information is carried in a first type length value TLV.

In a possible implementation, the first information includes indication information indicating that the service traffic is not transmitted through the second candidate path, or a resource value used for actual transmission of the service traffic through the second candidate path.

In a possible implementation, the apparatus further includes a receiving unit, configured to receive the first SR policy sent by the controller.

In a possible implementation, the sending unit 402 is further configured to send second information to the controller when determining that the service traffic needs to be transmitted through the second candidate path. The second information is used to request the controller to reserve a resource for the second candidate path.

In a possible implementation, the receiving unit included in the apparatus is further configured to receive a second SR policy sent by the controller, where the second SR policy includes a third candidate path, the controller reserves a resource for the third candidate path, and the second SR policy is an update policy of the first SR policy. The sending unit 402 is further configured to transmit the service traffic according to the second SR policy through the third candidate path.

In a possible implementation, the receiving unit included in the apparatus is further configured to receive third information sent by the controller. The third information indicates that release of a resource occupied by a candidate path that is in the first SR policy and that is not used to transmit the service traffic is supported. The sending unit 402 is configured to send the first information to the controller based on the third information.

In a possible implementation, the receiving unit is configured to receive a BGP message sent by the controller. The BGP message includes the third information.

In a possible implementation, the receiving unit is configured to receive a second PCEP message sent by the controller. The second PCEP message includes the third information.

In a possible implementation, the third information is carried in a second TLV.

FIG. 5 is a diagram of a structure of an information processing apparatus according to an embodiment of this application. The information processing apparatus shown in FIG. 5 may be used in a controller, and is configured to perform the information processing method performed by the controller provided in the foregoing method embodiments.

In an example, the information processing apparatus 500 shown in FIG. 5 includes a receiving unit 501 and a processing unit 502.

The receiving unit 501 is configured to receive first information sent by a first network device, where the first information indicates that the controller does not need to reserve a resource for a second candidate path included in a first segment routing policy SR policy, the first SR policy includes a first candidate path and the second candidate path, service traffic is transmitted through the first candidate path and not transmitted through the second candidate path. The processing unit 502 is configured to release, based on the first information, a resource reserved for the second candidate path.

In a possible implementation, the receiving unit 501 is configured to receive a border gateway protocol link-state BGP LS message sent by the first network device. The BGP LS message includes the first information.

In a possible implementation, the receiving unit 501 is configured to receive a first path computation element communication protocol PCEP message sent by the first network device. The first PCEP message includes the first information.

In a possible implementation, the first information is carried in a first type length value TLV.

In a possible implementation, the first information includes indication information indicating that the service traffic is not transmitted through the second candidate path, or a resource value used for actual transmission of the service traffic through the second candidate path.

In a possible implementation, the apparatus further includes a sending unit, configured to send the first SR policy to the first network device.

In a possible implementation, the receiving unit 501 is further configured to receive second information sent by the first network device. The second information is used to request the controller to reserve a resource for the second candidate path.

In a possible implementation, the processing unit is further configured to: determine a third candidate path, reserve a resource for the third candidate path, and obtain a second SR policy including the third candidate path, where the second SR policy is an update policy of the first SR policy. The sending unit included in the apparatus is further configured to send the second SR policy to the first network device.

In a possible implementation, the sending unit is configured to: after receiving the second information sent by the first network device, send the second SR policy to the first network device. The second information is used to request the controller to reserve a resource for the second candidate path.

In a possible implementation, the sending unit included in the apparatus is further configured to send third information to the first network device. The third information indicates that release of a resource occupied by a candidate path that is in the first SR policy and that is not used to transmit the service traffic is supported.

In a possible implementation, the sending unit is further configured to send a BGP message to the first network device. The BGP message includes the third information.

In a possible implementation, the sending unit is further configured to send a second PCEP message to the first network device. The second PCEP message includes the third information.

In a possible implementation, the third information is carried in a second TLV.

For specific implementations of the apparatuses 400 and 500, refer to the foregoing related descriptions of the method embodiments. Details are not described herein again.

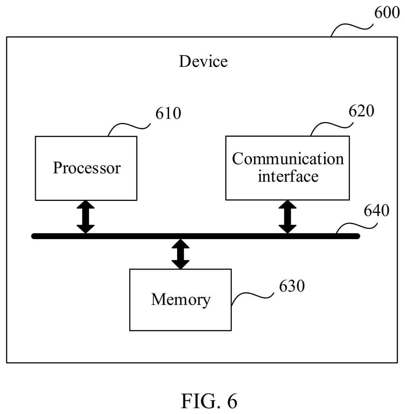

It should be noted that hardware structures of the information processing apparatuses 400 and 500 mentioned above may be a structure shown in FIG. 6. FIG. 6 is a diagram of a structure of a device according to an embodiment of this application.

Refer to FIG. 6. A device 600 includes a processor 610, a communication interface 620, and a memory 630. The device 600 may include one or more processors 610. In FIG. 6, one processor is used as an example. In this embodiment of this application, the processor 610, the communication interface 620, and the memory 630 may be connected by using a bus system or in another manner. In FIG. 6, an example in which the processor 610, the communication interface 620, and the memory 630 are connected by using a bus system 640 is used.

The processor 610 may be a central processing unit (central processing unit, CPU), a network processor (network processor, NP), or a combination of a CPU and an NP. The processor 610 may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof.

The memory 630 may include a volatile memory (English: volatile memory), for example, a random access memory (random access memory, RAM). The memory 630 may alternatively include a non-volatile memory (English: non-volatile memory), for example, a flash memory (English: flash memory), a hard disk drive (hard disk drive, HDD), or a solid-state drive (solid-state drive, SSD). The memory 630 may alternatively include a combination of the foregoing types of memories. For example, the memory 630 may store a first SR policy.

Optionally, the memory 630 stores an operating system and a program, an executable module, a data structure, a subset thereof, or an extended set thereof. The program may include various operation instructions for implementing various operations. The operating system may include various system programs, to implement various basic services and process a hardware-based task. The processor 610 may read a program in the memory 630, to implement the information processing method provided in embodiments of this application.

The bus system 640 may be a peripheral component interconnect (peripheral component interconnect, PCI) bus, an extended industry standard architecture (extended industry standard architecture, EISA) bus, or the like. The bus system 640 may be classified into an address bus, a data bus, a control bus, and the like. For ease of indication, the bus is indicated by only one bold line in FIG. 6. However, it does not indicate that there is only one bus or only one type of bus.

An embodiment of this application further provides a computer-readable storage medium, including instructions or a computer program. When the instructions or the computer program is run on a computer, the computer is enabled to perform the information processing method provided in the foregoing embodiments. For example, the computer is enabled to perform the information processing method performed by the first network device provided in the foregoing embodiments. For another example, the computer is enabled to perform the information processing method performed by the controller provided in the foregoing embodiments.

An embodiment of this application further provides a computer program product including instructions or a computer program. When the instructions or the computer program is run on a computer, the computer is enabled to perform the information processing method provided in the foregoing embodiments. For example, the computer is enabled to perform the information processing method performed by the first network device provided in the foregoing embodiments. For another example, the computer is enabled to perform the information processing method performed by the controller provided in the foregoing embodiments.

An embodiment of this application further provides a communication system. The communication system includes the first network device and the controller in the foregoing method embodiments.

In the specification, claims, and accompanying drawings of this application, the terms "first", "second", "third", "fourth", and the like (if existent) are intended to distinguish between similar objects but do not necessarily indicate a specific order or sequence. It should be understood that data used in such a way is interchangeable in proper circumstances, so that embodiments described herein can be implemented in an order other than the order illustrated or described herein. In addition, the terms "include", "have", and any other variants are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical service division. During actual implementation, there may be another division manner. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on multiple network units. Some or all of the units may be selected based on actual requirements to achieve objectives of the solutions of embodiments.

In addition, service units in embodiments of this application may be integrated into one processing unit, each unit may exist alone physically, or two or more units may be integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The storage medium includes any medium that can store program code, such as a USB flash drive, a removable hard disk drive, a read-only memory (ROM, Read-Only Memory), a random access memory (RAM, Random Access Memory), a magnetic disk, or an optical disc.

A person skilled in the art should be aware that in the foregoing one or more examples, services described in the present invention may be implemented by hardware, software, firmware, or any combination thereof. When implemented by the software, these services may be stored in a computer-readable medium or transmitted as one or more instructions or code on the computer-readable medium. The computer-readable medium includes a computer storage medium and a communication medium, and the communication medium includes any medium that enables a computer program to be transmitted from one place to another place. The storage medium may be any available medium accessible to a general-purpose or dedicated computer.

The objectives, technical solutions, and beneficial effects of the present invention are further described in detail in the foregoing specific implementations. It should be understood that the foregoing descriptions are merely specific implementations of the present invention.

In conclusion, the foregoing embodiments are merely intended to describe the technical solutions of this application, but not to limit this application. Although this application is described in detail with reference to the foregoing embodiments, a person of ordinary skill in the art should understand that modifications may still be made to the technical solutions described in the foregoing embodiments or equivalent replacements may still be made to some technical features thereof. However, these modifications or replacements do not make the essence of the corresponding technical solutions depart from the scope of the technical solutions of embodiments of this application.

## Claims

1. An information processing method, applied to a first network device, wherein the method comprises:
determining that service traffic is transmitted through a first candidate path and not transmitted through a second candidate path, wherein the first candidate path and the second candidate path belong to a first segment routing policy SR policy; and
sending first information to a controller, wherein the first information indicates that the controller does not need to reserve a resource for the second candidate path.

2. The method according to claim 1, wherein the sending the first information to the controller comprises:
sending, to the controller, a border gateway protocol link-state BGP LS message comprising the first information.

3. The method according to claim 1, wherein the sending the first information to the controller comprises:
sending, to the controller, a first path computation element communication protocol PCEP message comprising the first information.

4. The method according to claim 2 or 3, wherein the first information is carried in a first type length value TLV.

5. The method according to any one of claims 1 to 4, wherein the first information comprises:
indication information indicating that the service traffic is not transmitted through the second candidate path, or a resource value used for actual transmission of the service traffic through the second candidate path.

6. The method according to any one of claims 1 to 5, wherein the method further comprises:
receiving the first SR policy sent by the controller.

7. The method according to any one of claims 1 to 6, wherein the method further comprises:
sending second information to the controller when determining that the service traffic needs to be transmitted through the second candidate path, wherein the second information is used to request the controller to reserve a resource for the second candidate path.

8. The method according to claim 7, wherein the method further comprises:
receiving a second SR policy sent by the controller, wherein the second SR policy comprises a third candidate path, the controller reserves a resource for the third candidate path, and the second SR policy is an update policy of the first SR policy; and
transmitting the service traffic through the third candidate path according to the second SR policy.

9. The method according to any one of claims 1 to 8, wherein the method further comprises:
receiving third information sent by the controller, wherein the third information indicates that release of a resource occupied by a candidate path that is in the first SR policy and that is not used to transmit the service traffic is supported; and
the sending the first information to the controller comprises:
sending the first information to the controller based on the third information.

10. The method according to claim 9, wherein receiving the third information sent by the controller comprises:
receiving a BGP message sent by the controller, wherein the BGP message comprises the third information.

11. The method according to claim 9, wherein the receiving the third information sent by the controller comprises:
receiving a second PCEP message sent by the controller, wherein the second PCEP message comprises the third information.

12. The method according to claim 10 or 11, wherein the third information is carried in a second TLV.

13. An information processing method, applied to a controller, wherein the method comprises:
receiving first information sent by a first network device, wherein the first information indicates that the controller does not need to reserve a resource for a second candidate path comprised in a first segment routing policy SR policy, the first SR policy comprises a first candidate path and the second candidate path, service traffic is transmitted through the first candidate path and not transmitted through the second candidate path; and
releasing, based on the first information, a resource reserved for the second candidate path.

14. The method according to claim 13, wherein receiving the first information sent by the first network device comprises:
receiving a border gateway protocol link-state BGP LS message sent by the first network device, wherein the BGP LS message comprises the first information.

15. The method according to claim 13, wherein the receiving the first information sent by the first network device comprises:
receiving a first path computation element communication protocol PCEP message sent by the first network device, wherein the first PCEP message comprises the first information.

16. The method according to claim 14 or 15, wherein the first information is carried in a first type length value TLV.

17. The method according to any one of claims 13 to 16, wherein the first information comprises:
indication information indicating that the service traffic is not transmitted through the second candidate path, or a resource value used for actual transmission of the service traffic through the second candidate path.

18. The method according to any one of claims 13 to 17, wherein the method further comprises:
sending the first SR policy to the first network device.

19. The method according to any one of claims 13 to 18, wherein the method further comprises:
receiving second information sent by the first network device, wherein the second information is used to request the controller to reserve a resource for the second candidate path.

20. The method according to claims 13 to 19, wherein the method further comprises:
determining a third candidate path, reserving a resource for the third candidate path, and obtaining a second SR policy comprising the third candidate path, wherein the second SR policy is an update policy of the first SR policy; and
sending the second SR policy to the first network device.

21. The method according to claim 20, wherein sending the second SR policy to the first network device comprises:
after receiving the second information sent by the first network device, sending the second SR policy to the first network device, wherein the second information is used to request the controller to reserve a resource for the second candidate path.

22. The method according to any one of claims 13 to 21, wherein the method further comprises:
sending third information to the first network device, wherein the third information indicates that release of a resource occupied by a candidate path that is in the first SR policy and that is not used to transmit the service traffic is supported.

23. The method according to claim 22, wherein the sending the third information to the first network device comprises:
sending a BGP message to the first network device, wherein the BGP message comprises the third information.

24. The method according to claim 22, wherein the sending the third information to the first network device comprises:
sending a second PCEP message to the first network device, wherein the second PCEP message comprises the third information.

25. The method according to claim 23 or 24, wherein the third information is carried in a second TLV.

26. An information processing apparatus, used in a first network device, wherein the apparatus comprises:
a processing unit, configured to determine that service traffic is transmitted through a first candidate path and not transmitted through a second candidate path, wherein the first candidate path and the second candidate path belong to a first segment routing policy SR policy; and
a sending unit, configured to send first information to a controller, wherein the first information indicates that the controller does not need to reserve a resource for the second candidate path.

27. An information processing apparatus, used in a controller, wherein the apparatus comprises:
a receiving unit, configured to receive first information sent by a first network device, wherein the first information indicates that the controller does not need to reserve a resource for a second candidate path comprised in a first segment routing policy SR policy, the first SR policy comprises a first candidate path and the second candidate path, service traffic is transmitted through the first candidate path and not transmitted through the second candidate path; and
a processing unit, configured to release, based on the first information, a resource reserved for the second candidate path.

28. A device, comprising a processor and a memory, wherein
the memory is configured to store instructions or a computer program; and
the processor is configured to execute the instructions or the computer program to perform the method according to any one of claims 1 to 25.

29. A computer-readable storage medium, comprising instructions or a computer program, wherein when the instructions or the computer program is run on a computer, the computer is enabled to perform the method according to any one of claims 1 to 25.

30. A communication system, wherein the communication system comprises:
a first network device that performs the method according to any one of claims 1 to 12, and a controller that performs the method according to any one of claims 13 to 25.

31. A computer program product, comprising a computer program, wherein when the computer program is run on a processor, the method according to any one of claims 1 to 25 is performed.
